# EUROPÄISCHE PATENTANMELDUNG

(11) **EP 4 620 361 A1**
(43) Veröffentlichungstag der Anmeldung: **24.09.2025**
(21) Anmeldenummer: 24164490.5
(22) Anmeldetag: 19.03.2024
(51) Int. Cl.: A47J 36/32, A47J 43/07

(54) **VORRICHTUNG UND VERFAHREN ZUM ERMITTELN EINER ZIEL-KERNTEMPERATUR**

(71) Anmelder: Vorwerk & Co. Interholding GmbH, 42275 Wuppertal (DE)
(72) Erfinder: Stein, Matthias, 45472 Mühlheim an der Ruhr (DE); Paridou, Theodora, 51373 Leverkusen (DE); Rodriguez, Beatriz, 58256 Ennepetal (DE); Ferrigno, Simone, 40225 Düsseldorf (DE); Aloe, Andrea, 8853 Wollerau (CH)
(74) Vertreter: Gille Hrabal Partnerschaftsgesellschaft mbB Patentanwälte

(57) **Zusammenfassung**

Die Erfindung betrifft eine Vorrichtung und ein Verfahren zum Ermitteln einer Ziel-Kerntemperatur für eine zu erhitzende Speise sowie ein System zum Zubereiten einer Speise. Eine Vorrichtung (1) zum Ermitteln einer Ziel-Kerntemperatur (Td,c) für eine zu erhitzende Speise umfasst eine Einheit zum Erhalten von Informationen (2) zu Zutaten einer Speise und eine Festlegungseinheit (3) zum Festlegen einer Ziel-Kerntemperatur (Td,c) basierend auf den erhaltenen Informationen der Speise. Auf diese Weise kann automatisiert eine Ziel-Kerntemperatur ermittelt werden und das Gelingen von zu erhitzenden Speisen verbessert werden.

## Beschreibung

Die Erfindung betrifft eine Vorrichtung und ein Verfahren zum Ermitteln einer Ziel-Kerntemperatur für eine zu erhitzende Speise sowie ein System zum Zubereiten einer Speise.

Beim Zubereiten von Speisen durch Erhitzen ist die Kerntemperatur der Speise ein wichtiger Indikator für das Ende des Speisenzubereitungsprozesses. Ist eine bestimmte Kerntemperatur erreicht, ist die Speisenzubereitung abgeschlossen. Das Messen der Kerntemperatur hat sich deshalb bei vielen Speisenzubereitungsvorgängen etabliert.

Zudem hat die richtige Wahl der Kerntemperatur erheblichen Einfluss auf das Ergebnis der Speisenzubereitung. Wird eine zu hohe Kerntemperatur gewählt, kann beispielsweise ein Brot oder Kuchen trocken werden. Bei einer zu geringen Kerntemperatur ist dagegen der Teig noch nicht gar bzw. noch nicht fest. Die Wahl der richtigen Ziel-Kerntemperatur ist daher bei jedem Speisenzubereitungsvorgang, der anhand der Kerntemperatur gesteuert bzw. beendet wird, ein wesentlicher Einflussfaktor für das Gelingen der Speise.

Bisher basieren die verwendeten Ziel-Kerntemperaturen auf Schätzungen oder Erfahrungen. Jede Person hat unterschiedliche Erfahrungen oder Quellen. Zudem werden bekannte Ziel-Kerntemperaturen einer Speise auf andere, ähnliche Speisen übertragen. Auf diese Weise kommt es zu Ungenauigkeiten und Fehlern und die Zubereitung kann selbst dann nicht immer reproduzierbar erfolgen, wenn dasselbe Rezept zugrunde liegt. Zudem enthalten die wenigsten Rezepte konkrete Angaben zu Ziel-Kerntemperaturen.

Es ist die Aufgabe der Erfindung, ein besonders reproduzierbares und qualitativ hochwertiges Zubereiten von zu erhitzenden Speisen zu ermöglichen.

Die Aufgabe wird gelöst durch die Vorrichtung gemäß Anspruch 1 sowie das Verfahren und das System nach den nebengeordneten Ansprüchen. Vorteilhafte Ausgestaltungen sind in den Unteransprüchen angegeben.

Zur Lösung der Aufgabe dient eine Vorrichtung zum Ermitteln einer Ziel-Kerntemperatur für eine zu erhitzende Speise. Die Vorrichtung umfasst eine Einheit zum Erhalten von Informationen zu Zutaten einer Speise und eine Festlegungseinheit zum Festlegen einer Ziel-Kerntemperatur basierend auf den erhaltenen Informationen der Speise.

Es hat sich gezeigt, dass die automatisierte Ermittlung einer Ziel-Kerntemperatur eine besonders verlässliche und reproduzierbare Speisenzubereitung mit einer hohen Qualität ermöglicht. Das Zubereitungsergebnis einer Speise hängt wesentlich von der Kerntemperatur ab. Da jede Speise für ein optimales Gelingen unterschiedliche Ziel-Kerntemperaturen benötigt, hängt das Gelingen einer Speisenzubereitung stark davon ab, die richtige Ziel-Kerntemperatur zu verwenden. Die automatisierte Ermittlung der optimalen Ziel-Kerntemperatur ermöglicht zudem ein rasches und reproduzierbares Ergebnis. Ein manuelles, ggf. mehrschrittiges und damit aufwändiges Testen ist nicht mehr notwendig. Insgesamt kann also das Gelingen von zu erhitzenden Speisen verbessert werden. Eine Ziel-Kerntemperatur im Sinne der Erfindung meint eine für die jeweilige Speise optimale Ziel-Kerntemperatur, bei der die Speise wie gewünscht gegart ist.

Die Vorrichtung kann Teil einer Datenverarbeitungseinheit sein bzw. als eine solche ausgestaltet sein. Insbesondere ist ein Prozessor vorhanden, der zumindest die Festlegungseinheit umfasst. Die Festlegungseinheit kann z. B. auf einem Cloud-Server vorliegen. Die Festlegungseinheit legt eine Ziel-Kerntemperatur der zu erhitzenden Speise fest. Insbesondere analysiert die Festlegungseinheit die Art und/oder Mengen der Zutaten und ermittelt auf dieser Basis die Ziel-Kerntemperatur.

Die Festlegungseinheit kann darüber hinaus weitere Informationen berücksichtigen. Beispielsweise kann eine Benutzereingabe verwendet werden, um ein vom Benutzer gewünschtes Ergebnis zu berücksichtigen. Beispielsweise kann eine Benutzereingabe verwendet werden hinsichtlich der Frage, ob eine gewünschte Konsistenz eines Käsekuchens eher weich oder eher fest ist. Neben den Zutaten für den Käsekuchen kann dann ein individueller Wunsch des Benutzers berücksichtigt werden.

Erhalten von Informationen kann umfassen, dass Informationen empfangen und/oder für einen Zugriff bereitgestellt werden. Die Einheit zum Erhalten von Informationen dient dazu, der Festlegungseinheit die Informationen bereitzustellen. Es kann ein Prozessor vorhanden sein, der die Einheit zum Erhalten von Informationen umfasst oder als solche dient. Es kann eine Schnittstelle vorhanden sein, um der Festlegungseinheit die Informationen zu den Zutaten der Speise zur Verfügung zu stellen. Die Einheit zum Erhalten von Informationen kann als Schnittstelle ausgestaltet sein oder eine solche umfassen. Die Einheit zum Erhalten von Informationen kann räumlich getrennt von der Festlegungseinheit vorliegen.

Die Zutaten der Speise sind insbesondere die Inhaltsstoffe, die zur Zubereitung der Speise gemischt werden, bevor die Speise erhitzt wird. Beispielsweise sind die Zutaten eines Kuchenteigs oder eines Brotteigs gemeint, die nach dem Mischen im Ofen gebacken werden. Die Zutaten können z. B. Mehl, Milch, Hefe, Zucker, Eier, Öl, Butter und dergleichen umfassen. Die Informationen zu den Zutaten umfassen bevorzugt die Art der Zutaten und insbesondere auch Mengenangaben, beispielsweise ein Gewicht einer jeweiligen Zutat. sAlternativ oder ergänzend können Verhältnisse von Zutaten angegeben sein.

Die Vorrichtung kann Teil eines Küchengeräts wie z. B. einer Küchenmaschine oder eines Speisenthermometers sein. In diesem Fall wird das Küchengerät dazu in die Lage versetzt, eine Ziel-Kerntemperatur zu bestimmen.

In einer Ausführungsform ist die Speise eine zu backende Speise und/oder das Erhitzen der Speise erfolgt in einem Ofen.

In einer Ausgestaltung ist die Vorrichtung dazu eingerichtet, unter Verwendung der erhaltenen Informationen eine Art der Speise zu ermitteln und die ermittelte Art der Speise beim Festlegen der Ziel-Kerntemperatur zu berücksichtigen.

Eine Art der Speise meint eine Kategorie, in der ähnliche Speisen zusammengefasst werden können und gegenüber anderen Arten oder Kategorien abgegrenzt werden können. Beispiele für Arten von Speisen sind Brot, Kuchen, Kekse, Pizza, Auflauf, Fleisch, etc.

Beispielsweise kann zwischen Brot und Kuchen unterschieden werden. Es hat sich gezeigt, dass für unterschiedliche Arten von Speisen, beispielsweise für Brot und Kuchen, unterschiedliche Wege zur Ermittlung einer Ziel-Kerntemperatur sinnvoll sind. Auf diese Weise kann sichergestellt werden, dass eine besonders gut geeignete Ziel-Kerntemperatur ermittelt wird.

Die Vorrichtung kann dazu eingerichtet sein, die Informationen zu den Zutaten zu analysieren und auf dieser Basis die Art der Speise zu ermitteln. Beispielsweise können bestimmte Kombinationen von Zutaten für eine bestimmte Art von Speise sprechen. So kann bestimmt werden, dass eine Speise, deren Zutaten Eier, Mehl, Hefe und Wasser enthalten, Brot ist. Beispielsweise kann bestimmt werden, dass eine Speise, deren Zutaten Backpulver, Mehl und mindestens eines aus Öl, Butter und Margarine enthält, Kuchen ist.

Die Vorrichtung kann eine Liste mit Schlagworten umfassen oder auf eine solche Liste zugreifen, in der Arten von Speisen und zugehörige typische Zutaten aufgelistet sind. Die Zutaten können mit der Liste verglichen werden, um anhand der Zutaten und ggf. deren Mengenangaben die Art der Speise zu ermitteln.

Die Vorrichtung kann ausschließlich anhand der ermittelten Art der Speise eine Ziel-Kerntemperatur festlegen. Beispielsweise kann im Falle von Brot immer dieselbe Ziel-Kerntemperatur gewählt werden. Die Vorrichtung kann weitere Informationen zur Ermittlung der Ziel-Kerntemperatur berücksichtigen. Beispielsweise können im Falle von Kuchen weitere Schritte zur Ermittlung der geeigneten Ziel-Kerntemperatur nötig sein.

Es kann alternativ oder ergänzend ein zu verwendendes Gerät für die Bestimmung der Art der Speise verwendet werden. Beispielsweise wird ein Kuchen oder ein Brot in der Regel im Ofen zubereitet. Die Vorrichtung kann das Rezept daraufhin analysieren, ob eine Zubereitung im Ofen vorgesehen ist.

Alternativ oder ergänzend kann ein im Rezept hinterlegter Modus eines Küchengeräts, insbesondere einer Küchenmaschine, in welchem ein Küchengerät beispielsweise zur Herstellung eines Teigs zu verwenden ist, für die Bestimmung der Art der Speise verwendet werden. Enthält das Rezept beispielsweise die Anweisung, einen Brot-Modus, Knet-Modus oder Teig-Modus einer Küchenmaschine zu verwenden, kann bestimmt werden, dass die Speise Brot ist. Es können mehrere erhaltene und/oder ermittelte Informationen verknüpft werden.

In einer Ausgestaltung ist die Vorrichtung dazu eingerichtet, auf ein elektronisch gespeichertes Rezept zum Zubereiten der Speise zuzugreifen.

Rezepte können in einer Rezeptdatenbank vorliegen, auf die die Vorrichtung zugreifen kann. Die Rezeptdatenbank kann vorgegebene Rezepte und/oder von einem oder mehreren Benutzern zur Verfügung gestellte Rezepte enthalten. Die Rezeptdatenbank kann lokal in oder bei der Vorrichtung oder entfernt gespeichert sein, wobei im letzteren Fall eine Datenverbindung zwischen der Vorrichtung und der Rezeptdatenbank vorhanden oder herstellbar ist. Die Einheit zum Erhalten von Informationen kann dann auf Informationen aus der Rezeptdatenbank zugreifen.

In einer Ausführungsform ist die Vorrichtung dazu eingerichtet, die ermittelte Ziel-Kerntemperatur dem Rezept hinzuzufügen. Die Vorrichtung ist demnach in der Lage, das Rezept zu ändern.

In einer Ausgestaltung ist die Vorrichtung dazu eingerichtet, das Rezept zu analysieren, um zu ermitteln, ob das Rezept eine zu erhitzende Speise betrifft. Die Ermittlung, ob ein Rezept eine zu erhitzende Speise betrifft, kann beispielsweise als Voraussetzung für die weitere Ermittlung oder Analyse dienen. Eine solche Ermittlung kann als erster Schritt ausgeführt werden. Betrifft das Rezept keine zu erhitzende Speise, muss keine Ziel-Kerntemperatur ermittelt werden. Es kann dann eine entsprechende Mitteilung ausgegeben werden und/oder es kann ein nächstes Rezept analysiert werden. Betrifft das Rezept eine zu erhitzende Speisen, können weitere Analysen des Rezepts durchgeführt werden, um z. B. die Ziel-Kerntemperatur zu ermitteln.

Soll ermittelt werden, ob das Rezept eine zu erhitzende Speise betrifft, kann das Rezept beispielsweise auf im Rezept genannte, zu verwendende Geräte hin analysiert werden. Enthalten die zu verwendenden Geräte eine Gerät mit einer Heizeinrichtung, beispielsweise einen Ofen, oder wird eine Heizeinrichtung zur Zubereitung verwendet, kann bestimmt werden, dass das Rezept eine zu erhitzende Speise betrifft. Enthalten die zu verwendenden Geräte kein Gerät mit einer Heizeinrichtung oder wird eine Heizeinrichtung eines Geräts nicht verwendet, kann bestimmt werden, dass das Rezept keine zu erhitzende Speise betrifft.

Die Vorrichtung kann eine Liste mit Schlagworten umfassen oder auf eine solche Liste zugreifen, in der beispielsweise Geräte mit Heizeinrichtungen aufgelistet sind. Das Rezept kann auf das Vorkommen dieser Schlagworte hin analysiert werden. Diese Ausgestaltung ermöglicht eine besonders effiziente Ermittlung geeigneter Ziel-Kerntemperaturen.

In einer Ausgestaltung ist die Vorrichtung dazu eingerichtet, das Rezept zu analysieren, um Informationen zu den Zutaten der Speise zu erhalten. Hierbei ist die Vorrichtung dazu eingerichtet, die Informationen zu den Zutaten aus dem Rezept zu extrahieren. Die Vorrichtung umfasst bevorzugt eine Analyseeinheit zum Analysieren des Rezepts.

Die Vorrichtung kann dazu eingerichtet sein, auf der Basis des Rezepts die Art der Speise zu ermitteln. In einer einfachen Ausführungsform kann die Vorrichtung dazu eingerichtet sein, eine Klassifizierung der Speise zum Ermitteln der Art der Speise zu verwenden. Beispielsweise kann in einem Rezept eine Klassifizierung der Speise in "Kuchen", "Brot", etc. enthalten sein. Diese kann auf einfache Weise verwendet werden. Ergänzend oder alternativ, beispielsweise wenn eine solche Klassifizierung nicht enthalten ist, kann die Vorrichtung anhand der in dem Rezept enthaltenen Zutaten und ggf. Mengenangaben die Art der Speise ermitteln. In dieser Ausgestaltung kann die Vorrichtung besonders einfach Informationen zu Zutaten erhalten.

In einer Ausgestaltung ist die Vorrichtung dazu eingerichtet, einen Anteil einer Zutat, einer Zutatengruppe oder eines Nährstoffs zu ermitteln. Insbesondere ist der Anteil der Zutat, Zutatengruppe oder des Nährstoffs an der Speise gemeint. Anteile sind dabei insbesondere Massenanteile an der Gesamtmasse der Speise oder an der Masse einer Zutat oder Zutatengruppe. Ein Beispiel ist der Anteil an Fett in der Speise (Fettgehalt). Insbesondere analysiert die Vorrichtung Zutaten und zugehörige Mengenangaben und errechnet jeweilige Anteile.

Beispielsweise ermittelt die Vorrichtung Anteile von Zutaten oder Zutatengruppen an der Speise. So kann die Vorrichtung dazu eingerichtet sein, einen Anteil eines bestimmten Lebensmittels und/oder eines bestimmten Nährstoffs des Lebensmittels an der Speise zu bestimmen, beispielsweise den Fettanteil. Es hat sich gezeigt, dass auf dieser Basis besonders verlässliche Aussagen über eine geeignete Ziel-Kerntemperatur getroffen werden können.

Beispielsweise ermittelt die Vorrichtung Verhältnisse von verschiedenen Zutaten oder Zutatengruppen. So kann auch der Anteil einer Zutat oder Zutatengruppe an einer anderen Zutat oder Zutatengruppe ermittelt werden. Beispielsweise kann es vorteilhaft sein, den Anteil von Fett bezogen auf den Mehl (beispielsweise Stärke, Mehl, Nussmehl, etc.) oder Kohlenhydrate zu bestimmen. Einige Rezepte enthalten Angaben wie "Füge Butter und Mehl im Verhältnis 1:10 zu", ggf. ohne konkrete Mengenangaben. Die oben beschriebene Vorgehensweise kann dann trotz der fehlenden konkreten Mengenangaben dennoch eine geeignete Ziel-Kerntemperatur ermitteln. Auch kann es möglich sein, dass durch einen Anteil an einer anderen Zutat oder Zutatengruppe verbesserte Ergebnisse hinsichtlich der Ziel-Kerntemperatur geliefert werden können und/oder optimale Ziel-Kerntemperaturen allgemeingültig ermittelt werden können. Es kann bei dieser Vorgehensweise allerdings notwendig sein, zutatenbezogen Gehalte an einzelnen Nährstoffen zu errechnen.

Die Vorrichtung kann eine Liste mit Schlagworten umfassen oder auf eine solche Liste zugreifen, in der Zutaten aufgelistet sind. Das Rezept kann auf das Vorkommen dieser Schlagworte hin analysiert werden. Die Liste kann als Tabelle und/oder Datenbank ausgeführt sein, wobei den jeweiligen Zutaten bestimmte Eigenschaften oder Zugehörigkeiten zu bestimmten Zutatengruppen zugeordnet sind.

Für die Ermittlung eines Anteils einer Zutatengruppe werden typischerweise die Mengen bzw. Anteile, insbesondere die Massen, sämtlicher Zutaten addiert, die dieser Zutatengruppe angehören, und auf die Gesamtmasse der Speise bezogen. Die Gesamtmasse der Speise kann beispielsweise aus der Summe der Massen aller Zutaten ermittelt werden.

Beispielsweise können Bananen, Äpfel, Kiwis, Pfirsiche, Aprikosen usw. als Früchte aufgelistet sein. Die Vorrichtung kann unter Verwendung der Liste und der analysierten Zutaten in der Lage sein, einen Fruchtanteil der Speise zu ermitteln.

In einem anderen Beispiel können Roggenmehl, Weizenmehl, Speisestärke, Maismehl, usw. als "Mehl" aufgelistet sein. Es kann daher ein Mehl-Anteil ermittelt werden. Ergänzend oder alternativ kann ein Anteil eines bestimmten Nährstoffs aufgelistet sein. So kann beispielsweise zu jedem Mehl oder zu jeder aufgelisteten Zutat ein Anteil an Kohlenhydraten hinterlegt sein. Auf diese Weise kann ein Kohlenhydrat-Anteil der Speise bestimmt werden. Dasselbe gilt beispielsweise für Fett, Zucker und/oder Proteine.

In einer Ausführungsform ist die Vorrichtung dazu eingerichtet, einen Anteil an Milchprodukten zu ermitteln. Dabei kann ein Anteil an Butter ausgenommen werden, so dass beispielsweise der summierte Anteil von Milch, Sahne, Joghurt, ggf. außerdem Quark bzw. (Frisch-)Käse ermittelt wird. Es hat sich gezeigt, dass auf diese Weise besonders verlässlich ein Käsekuchen erkannt werden kann. Beispielsweise kann bei einem Anteil an Milchprodukten ohne Butter von 50% oder mehr als 50% bestimmt werden, dass die Speise ein Käsekuchen ist.

In einer Ausführungsform ist die Vorrichtung dazu eingerichtet, eine Fruchtanteil oder Obstanteil zu ermitteln. Es hat sich herausgestellt, dass die optimale Kerntemperatur von einem Fruchtanteil der Speise abhängt.

In einer Ausgestaltung ist die Vorrichtung dazu eingerichtet, auf der Basis des elektronisch gespeicherten Rezepts einen Fettanteil der Speise zu ermitteln und den Fettanteil beim Festlegen der Ziel-Kerntemperatur zu berücksichtigen. Es hat sich gezeigt, dass der Fettanteil eine besonders gute Grundlage für die Ermittlung der Ziel-Kerntemperatur darstellt. Ist der Fettanteil bekannt, ist es in vielen Fällen nicht notwendig, weitere Anteile oder Informationen zu berücksichtigen. So kann auf schnelle und einfache Weise die Ziel-Kerntemperatur bestimmt werden.

Die Vorrichtung analysiert das Rezept und ermittelt den Fettanteil der Speise. Beispielsweise kann die Vorrichtung auf eine Datenbank zugreifen, in der Fettanteile unterschiedlicher Lebensmittel bzw. Zutaten hinterlegt sind. Unter Verwendung der jeweiligen Fettanteile und der Mengen der betreffenden Zutaten kann so ein Gesamt-Fettanteil der Speise berechnet werden.

In einer einfachen Ausführungsform können Fettanteile derjenigen Lebensmittel, die kein oder kaum Fett enthalten, grundsätzlich unberücksichtigt bleiben. In dieser Ausführungsform ist es ausreichend, wenn Fettanteile von stark fetthaltigen Lebensmitteln wie beispielsweise Butter, Öl, Margarine, Quark, Sahne, Frischkäse und Nüsse hinterlegt sind. Fettanteile von wenig fetthaltigen Lebensmitteln wie beispielsweise Mehl, Eiern, Zucker, Honig, Hefe und anderen fallen dagegen kaum ins Gewicht und können unberücksichtigt bleiben.

In einer Ausführungsform werden die Art der Speise und der Fettanteil der Speise berücksichtigt, um die Ziel-Kerntemperatur zu bestimmen. So hat sich gezeigt, dass sich der Fettanteil bei Brot anders auswirkt als bei Kuchen. Im Falle von Kuchen hat sich gezeigt, dass die Ziel-Kerntemperatur mit steigendem Fettanteil ebenfalls steigt. Bei Brot verhält es sich anders herum. Bei geringen Fettanteilen ist die Ziel-Kerntemperatur höher als bei hohen Fettanteilen. Auf diese Weise kann besonders verlässlich die geeignete Ziel-Kerntemperatur ermittelt werden.

In einer Ausführungsform wird eine Ziel-Kerntemperatur von ungefähr 96° gewählt, wenn der Fettanteil der Speise kleiner ist als 10%.

Die folgende Tabelle zeigt Fettgehalte ausgewählter Rezepte.

| **Rezept** | **Fettgehalt (g)** | **Gesamtgewicht (g)** | **Fettgehalt (%)** |
|---|---|---|---|
| **Marmorkuchen** | 288 | 1050 | 27% |
| **Biskuit** | 24 | 360 | 7% |
| **Russischer Zupfkuchen** | 352 | 1610 | 22% |
| **Käsekuchen** | 320 | 2455 | 13% |
| **Zitronenkuchen** | 132 | 603 | 22% |
| **Rüblitorte** | 208 | 912 | 23% |
| **Nusskuchen** | 320 | 930 | 34% |
| **Joghurtkuchen** | 120 | 550 | 22% |
| **Bananenbrot mit Pecannüssen** | 216 | 990 | 22% |
| **Rahmkuchen** | 444 | 1800 | 25% |
| **Buchstaben-/ Zahlenkuchen** | 26 | 360 | 7% |

In einer Ausgestaltung ist die Vorrichtung dazu eingerichtet, mittels einer datentechnischen Verbindung mit einem Speisenthermometer Informationen zu einer Kerntemperatur einer Speise zu erhalten. Die Informationen sind durch das Speisenthermometer ermittelt. Die Vorrichtung ist dazu eingerichtet, anhand der erhaltenen Informationen zu ermitteln, ob die Ziel-Kerntemperatur erreicht ist. Beispielsweise weist die Vorrichtung eine Schnittstelle zur datentechnischen Verbindung mit dem Speisenthermometer auf.

Dies ermöglicht es, Informationen über die ermittelte Kerntemperatur vom Speisenthermometer zu erhalten, um diese weiter zu verwenden. Eine Schnittstelle kann von der Festlegungseinheit der Vorrichtung entfernt angeordnet sein. So kann die Festlegungseinheit der Vorrichtung auf einem entfernten Server vorliegen und die Schnittstelle kann Teil einer Küchenmaschine sein, so dass Daten vom Speisenthermometer über die Küchenmaschine zur Festlegungseinheit und/oder anders herum gesendet werden. Insbesondere ist die Vorrichtung in dieser Ausgestaltung jedoch Teil einer Küchenmaschine. Die Schnittstelle kann dazu eingerichtet sein, eine Funkverbindung zwischen der Küchenmaschine und dem Speisenthermometer herzustellen.

Die Vorrichtung kann Teil eines Speisenthermometers sein. In diesem Fall erfolgt die Datenübertragung lediglich innerhalb des Speisenthermometers. In diesem Fall wird die datentechnische Verbindung von einem Sensor bzw. einer Auswertungseinheit für Sensorsignale zu der Vorrichtung, insbesondere der Festlegungseinheit hergestellt. Wenn die Vorrichtung bzw. die Festlegungseinheit durch dieselbe Datenverarbeitungseinheit bereitgestellt wird wie eine Steuerungseinheit des Speisenthermometers, erfolgt die Datenübertragung lediglich in der Datenverarbeitungseinheit.

Informationen zu einer Kerntemperatur meint Informationen oder Daten, die eine Aussage über die Kerntemperatur erlauben. Dies können beispielsweise analoge oder digitale Signale sein. Die Vorrichtung kann dazu eingerichtet sein, die ermittelte Ziel-Kerntemperatur als Soll-Kerntemperatur für einen Speisenzubereitungsvorgang zu setzen. Bei der Speisenzubereitung wird dann die Soll-Temperatur mit der Ist-Temperatur verglichen, um das Erhitzen der Speise zu steuern. Die Vorrichtung kann beispielsweise die erhaltene Kerntemperatur oder entsprechende Informationen mit der Soll-Kerntemperatur vergleichen. Stimmen die Werte überein oder ist die Abweichung der erhaltenen Kerntemperatur von der Soll-Kerntemperatur unterhalb eines vordefinierten Schwellwerts, kann ermittelt werden, dass die Ziel-Kerntemperatur erreicht ist. In diesem Fall kann der Speisenzubereitungsvorgang beendet werden. Die Vorrichtung kann dazu eingerichtet sein, während der Speisenzubereitung insbesondere in Echtzeit die Kerntemperatur in der Speise zu überwachen.

In einer Ausführungsform ist die Vorrichtung dazu eingerichtet, bei Erreichen der Ziel-Kerntemperatur eine Mitteilung auszugeben und/oder ein Signal zu senden. Beispielsweise ist die Vorrichtung datentechnisch mit einer Ausgabeeinheit verbunden. Die Ausgabeeinheit kann Teil einer Küchenmaschine sein. Die Ausgabeeinheit kann eine akustische und/oder eine optische Ausgabeeinheit umfassen. Beispielsweise kann ein Bildschirm einer Küchenmaschine als Ausgabeeinheit verwendet werden. Es kann dem Benutzer auf einfache Weise signalisiert werden, dass die Ziel-Kerntemperatur erreicht ist bzw. dass die Speisenzubereitung abgeschlossen ist.

In einer Ausgestaltung ist die Vorrichtung dazu eingerichtet, eine Heizeinrichtung zum Erhitzen der Speise zu steuern, um bei Erreichen der Ziel-Kerntemperatur ein Erhitzen der Speise zu beenden. In dieser Ausgestaltung hat die Vorrichtung Zugriff auf die Heizeinrichtung, dient also gleichermaßen als Steuerungseinheit für das zugehörige Küchengerät. Die Heizeinrichtung kann beispielsweise Teil eines Ofens, eines Herdes, einer Mikrowelle oder eines beheizbaren Gefäßes sein. Insbesondere ist die Heizeinrichtung elektrisch betreibbar. Diese Ausgestaltung erlaubt ein besonders sicheres Gelingen der Speise.

Die Vorrichtung kann dazu eingerichtet sein, eine Heizeinrichtung zu einem beliebigen Zeitpunkt ein- oder auszuschalten. Die Vorrichtung kann dazu eingerichtet sein, eine Soll-Temperatur der Heizeinrichtung festzulegen und/oder einen Speisenzubereitungsvorgang zu überwachen. Die Vorrichtung kann dazu eingerichtet sein, eine bestimmte Temperatur oder einen bestimmten Temperaturverlauf über die Zeit festzulegen. Die Vorrichtung kann eine Schnittstelle zur datentechnischen Verbindung mit der Heizeinrichtung bzw. mit dem die Heizeinrichtung aufweisenden Gerät aufweisen, beispielsweise eine Funkverbindung.

Weist die Vorrichtung auch die oben genannte Schnittstelle zur datentechnischen Verbindung mit einem Speisenthermometer auf, kann die Vorrichtung durch das Speisenthermometer ermittelte Informationen zu Kerntemperaturen einer Speise zu erhalten und bei Erreichen der Ziel-Kerntemperatur das Erhitzen der Speise beenden.

Ein weiterer Aspekt der Erfindung ist ein Verfahren zum Ermitteln einer Ziel-Kerntemperatur für eine zu erhitzende Speise. Das Verfahren umfasst Erhalten von Informationen zu Zutaten einer Speise und Festlegen einer Ziel-Kerntemperatur basierend auf den erhaltenen Informationen der Speise, insbesondere mittels einer Festlegungseinrichtung. Das Verfahren kann durch eine Steuereinheit eines Küchengeräts wie z. B. einer Küchenmaschine ausgeführt werden.

Insbesondere dient das Verfahren dem automatisierten Ermitteln der Ziel-Kerntemperatur. Damit ist gemeint, dass zumindest ein Teil der Ermittlung der Ziel-Kerntemperatur automatisiert erfolgt. Insbesondere ist das Verfahren ein computerimplementiertes Verfahren. Das Verfahren kann mit der erfindungsgemäßen Vorrichtung erfolgen. Alle Merkmale, Ausgestaltungen und Vorteile der eingangs beschriebenen Vorrichtung können auch für das Verfahren gelten und umgekehrt.

In einer Ausgestaltung ist die zu erhitzende Speise ein Kuchen. Damit ist gemeint, dass unter Erhitzen ein Kuchen hergestellt wird. Mit anderen Worten wird eine Ziel-Kerntemperatur für einen Kuchen ermittelt. Es wird basierend auf den Informationen zu Zutaten der Speise ermittelt, ob ein Fettanteil größer ist als ein erster Grenzwert von beispielsweise ungefähr 10%. Wenn ja, wird eine bestimmte Ziel-Kerntemperatur festgelegt, beispielsweise ca. 96 °C.

In einer Ausgestaltung wird in dem Fall, dass der Fettanteil kleiner oder gleich dem ersten Grenzwert ist, basierend auf den Informationen zu Zutaten der Speise ermittelt, ob ein Anteil einer Summe aus Milch, Sahne, Joghurt und Frischkäse größer ist als ein zweiter Grenzwert von beispielsweise ungefähr 50%. Wenn ja, wird ermittelt, dass es sich bei der Speise um einen Käsekuchen handelt.

In einer Ausgestaltung wird in dem Fall, dass der Anteil der Summe aus Milch, Sahne, Joghurt und Frischkäse kleiner oder gleich dem zweiten Grenzwert ist, basierend auf den Informationen zu Zutaten der Speise ermittelt, ob ein Fruchtgehalt größer ist als ein dritter Grenzwert von beispielsweise ungefähr 30%. Wenn ja, wird eine Ziel-Kerntemperatur von beispielsweise ungefähr 94 °C festgelegt. Wenn der Fruchtgehalt kleiner ist als der dritte Grenzwert, wird eine Ziel-Kerntemperatur von beispielsweise ungefähr 99 °C festgelegt.

Bei prozentuale Angaben der jeweiligen Grenzwerte können Abweichungen von höchstens ± 10%, insbesondere höchstens ± 5%, bevorzugt höchstens ± 2% toleriert werden. Bei Ziel-Kerntemperaturen im Sinne der Erfindung können Abweichungen von höchstens ± 2°C, insbesondere höchstens ± 1°C, bevorzugt höchstens ± 0,5°C toleriert werden.

Ein weiterer Aspekt der Erfindung ist ein System zum Zubereiten einer Speise. Das System umfasst eine Küchenmaschine zum Durchführen eines Speisenzubereitungsvorgangs durch Erhitzen, Zerkleinern und/oder Mischen einer Speise in einem Speisenzubereitungsgefäß sowie eine erfindungsgemäße Vorrichtung. Alle Merkmale, Ausgestaltungen und Vorteile der eingangs beschriebenen Vorrichtung und des Verfahrens können auch für das System gelten und umgekehrt.

Insbesondere enthält die Küchenmaschine eine Steuerungseinheit zum Steuern der Speisenzubereitung mit der Küchenmaschine und/oder mit Zugriff auf elektronisch gespeicherte Rezepte. Die Vorrichtung kann Teil der Küchenmaschine sein. Das Festlegen der Ziel-Kerntemperatur kann dabei von der Steuereinheit der Küchenmaschine erfolgen. Alternativ kann ein Teil der Vorrichtung oder die gesamte Vorrichtung räumlich getrennt von der Küchenmaschine angeordnet sein und über eine datentechnischen Verbindung mit der Küchenmaschine verbunden oder verbindbar sein. Das System ermöglicht die Zubereitung von Speisen, insbesondere nach einem elektronischen Rezept, und die Ermittlung der Ziel-Kerntemperatur, insbesondere basierend auf dem elektronischen Rezept.

In einer Ausgestaltung ist die Küchenmaschine dazu eingerichtet, auf ein digitales Rezept zuzugreifen. In einer Ausgestaltung ist die Küchenmaschine dazu eingerichtet, durch einen Rezeptschritt des Rezeptes veranlasst zu werden, eine Funktionskomponente der Küchenmaschine und/oder eine mit dem System verbundene Heizeinrichtung in einer durch den Rezeptschritt definierten Weise zu betreiben.

Die Küchenmaschine kann beispielsweise zur Steuerung eines Backofens eingerichtet sein. Hierzu kann eine Datenverbindung mit dem Backofen hergestellt werden. Es kann so die Speise durch Erhitzen zubereitet werden, beispielsweise ein Brot oder Kuchen gebacken werden. Es kann zuvor die Ziel-Kerntemperatur ermittelt werden. Während der Zubereitung kann die Kerntemperatur überwacht werden, beispielsweise unter Verwendung eines Speisenthermometers. Bei Erreichen der ermittelten Ziel-Kerntemperatur kann das Erhitzen beendet werden.

Diese Schritte können zumindest teilweise automatisiert stattfinden. Der Benutzer muss dann nur noch die Zutaten der Speise in ein Speisenzubereitungsgefäß der Küchenmaschine einfüllen, den Teig mit der Küchenmaschine rezeptgesteuert zubereiten und den fertigen Teig in eine geeignete Form geben und im Ofen platzieren.

In einer Ausführungsform umfasst das System einen Speicher zum elektronischen Speichern des Rezepts. Der Speicher ist insbesondere Teil der Küchenmaschine. Auf diese Weise kann auch ohne Anbindung an ein Datennetzwerk lokal die Ziel-Kerntemperatur aus dem Rezept bestimmt und die Speise zubereitet werden.

In einer Ausgestaltung weist das System eine Eingabeeinrichtung auf, mit welcher ein Benutzer ein Rezept eingeben kann, so dass die Vorrichtung für das Rezept eine Ziel-Kerntemperatur festlegen kann. Die Eingabeeinrichtung kann einen bevorzugt berührungsempfindlichen Bildschirm und/oder einen oder mehrere Knöpfe umfassen. Die Eingabeeinrichtung kann aber auch eine Datenschnittstelle umfassen, über die der Benutzer ein elektronisch gespeichertes Rezept, beispielsweise in Form einer Textdatei oder eines Fotos, eingeben kann. Diese Ausgestaltung ermöglicht es, für ein bekanntes Rezept aus dem Fundus des Benutzers automatisiert die optimale Ziel-Kerntemperatur zu ermitteln.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.O

Es zeigen:
- Figur 1:: eine schematische Darstellung einer erfindungsgemäßen Vorrichtung;
- Figur 2:: eine schematische Darstellung eines erfindungsgemäßen Systems;
- Figur 3:: ein Ablaufdiagramm zur Ermittlung einer Ziel-Kerntemperatur; sowie
- Figur 4:: ein Diagramm mit Ziel-Kerntemperaturen.

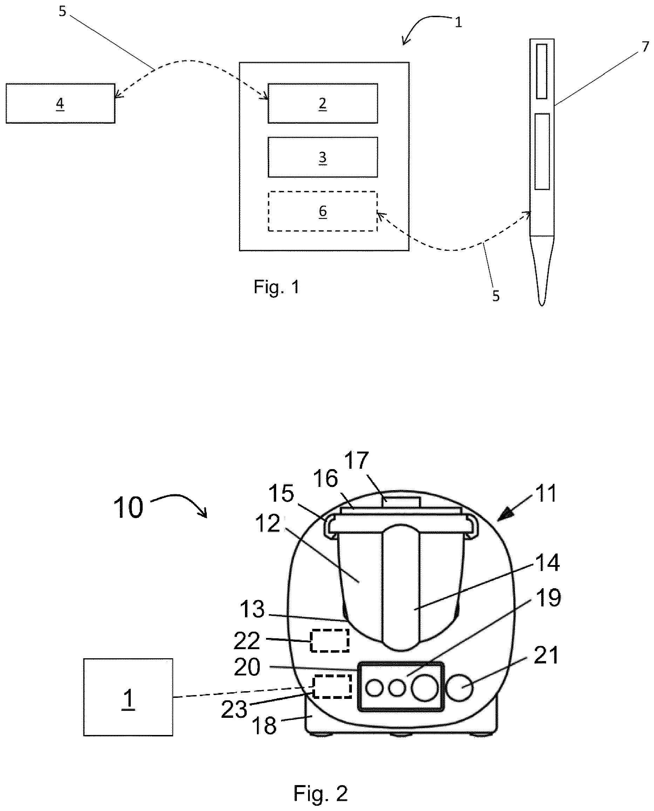

Figur 1 zeigt eine Vorrichtung 1 zum Ermitteln einer Ziel-Kerntemperatur für zu erhitzende Speisen. Die Vorrichtung 1 umfasst eine Einheit zum Erhalten von Informationen 2 zu Zutaten einer Speise und eine Festlegungseinheit 3 zum Festlegen einer Ziel-Kerntemperatur basierend auf den erhaltenen Informationen der Speise. So kann automatisiert eine Ziel-Kerntemperatur festgelegt werden.

Es kann eine Datenverbindung 5 zwischen der Vorrichtung 1, insbesondere der Einheit zum Erhalten von Informationen 2, und einem Rezeptspeicher 4 vorhanden sein. Der Rezeptspeicher 4 kann Teil der Vorrichtung 1 oder außerhalb sein. Die Datenverbindung 5 kann über Funk, über ein Netzwerk, beispielsweise das Internet und/oder kabelgebunden sein. Beliebige Kombinationen unterschiedlicher Datenverbindungen sind möglich. Die Datenverbindung 5 kann auch nur temporär für einen Datenübertragungsvorgang etabliert werden. Die Vorrichtung 1 kann dazu eingerichtet sein, beispielsweise vom Rezeptspeicher 4 Informationen zu Zutaten einer Speise, beispielsweise in Gestalt eines Rezepts, zu erhalten.

Die Vorrichtung 1 kann dazu eingerichtet sein, auf ein elektronisches Rezept zum Zubereiten einer Speise zuzugreifen. Die Vorrichtung 1 kann einen Speicher zum Speichern des Rezepts oder von auf dem Rezept beruhenden Informationen aufweisen.

Die Vorrichtung 1 kann eine Schnittstelle 6 zur datentechnischen Verbindung mit einem Speisenthermometer 7 aufweisen. Zwischen der Schnittstelle 6 und dem Speisenthermometer 7 kann eine weitere Datenverbindung 5 hergestellt werden. Das oben für die Datenverbindung 5 mit dem Rezeptspeicher Gesagte gilt ebenso für die Datenverbindung zum Speisenthermometer 7.

Figur 2 zeigt ein System 10, das eine Küchenmaschine 11 und eine Vorrichtung 1 zum Ermitteln einer Ziel-Kerntemperatur umfasst. Dargestellt ist eine Küchenmaschine 11 und eine separate Vorrichtung 1, die sich entfernt von der Küchenmaschine 11 befinden kann und über eine Datenverbindung mit der Küchenmaschine 11 gekoppelt werden kann. Es ist allerdings genauso möglich, dass die Vorrichtung 1 Teil der Küchenmaschine 11 ist und beispielsweise im Gehäuse der Küchenmaschine 11 angeordnet ist.

Die Küchenmaschine 11 umfasst ein Speisenzubereitungsgefäß 12, welches in eine Halterung 13 der Küchenmaschine 11 eingesetzt ist. Das Speisenzubereitungsgefäß 12 umfasst einen Griff 14, um das Speisenzubereitungsgefäß 12 aus der Halterung 13 leicht entfernen zu können. Die Küchenmaschine 11 umfasst insbesondere einen Schließmechanismus mit beispielsweise schwenkbar gelagerten Armen 15. In der in der Figur 1 gezeigten Schließstellung umschließen die Arme 15 einen Deckel 16. Dadurch ist der Deckel 16 fest mit dem Speisenzubereitungsgefäß 12 verbunden. Der Deckel 16 umfasst eine Öffnung, in welche ein Verschluss 17, zum Beispiel in Form eines transparente Gefäßes, eingesetzt ist. Durch den Verschluss 17 ist die Öffnung in dem Deckel 16 verschlossen. Der Verschluss 17 kann jederzeit von der Öffnung abgehoben werden, sodass dann eine Öffnung bereitstellt ist, durch die hindurch eine Zutat in das Speisenzubereitungsgefäß 12 eingefüllt werden kann. Das Gefäß kann als Dosierhilfe dienen. Wird der Schließmechanismus geöffnet, dann kann der Deckel 16 vom Speisenzubereitungsgefäß 12 entfernt werden. Die Küchenmaschine 11 umfasst für ein Aufstellen ein Fußteil 18. Das Speisenzubereitungsgefäß 12 kann in das Fußteil 18 eingesetzt und aus diesem entfernt werden

Insbesondere wird auf einem Bildschirm 20 eine Benutzeroberfläche 19 dargestellt. Der Bildschirm 20 ist vorzugsweise berührungsempfindlich, um beispielsweise Betriebsparameter durch Berühren des Bildschirms 20 einstellen zu können. Der Bildschirm 20 dient als Ein- und Ausgabeeinheit. Es kann beispielsweise über den Bildschirm 20 ein Rezept eingegeben werden. Die Küchenmaschine kann als zusätzliche Eingabeeinheit beispielsweise einen Dreh- und/oder Druckknopf 21 umfassen, der ebenfalls dazu dienen kann, im Zusammenspiel mit der Benutzeroberfläche 19 ein oder mehrere Betriebsparameter einstellen zu können. Wird in der Benutzeroberfläche 19 beispielsweise eine Bestätigung durch den Benutzer bezüglich eines fertig gestellten Rezeptschritts angefordert, so kann durch Druck auf den Dreh- und/oder Druckknopf 21 die Bestätigung eingegeben werden. Bezieht sich die Benutzeroberfläche 19 beispielsweise auf eine Rühr- und Schneideinrichtung der Küchenmaschine 11, so kann durch Drehen an dem Dreh- und/oder Druckknopf 11 beispielsweise eine Drehgeschwindigkeit eingestellt werden. Durch Drehen an dem Dreh- und/oder Druckknopf 21 können beispielsweise auch Zeitdauern für bestimmte Speisenzubereitungsprozesse und/oder Temperaturen eingestellt werden.

Die Küchenmaschine 11 umfasst eine schematisch dargestellte Steuerungseinheit 22, die auf ein elektronisch gespeichertes, insbesondere digitales Rezept zugreifen und durch einen Rezeptschritt des Rezepts veranlasst werden kann, die Funktionskomponenten der Küchenmaschine 11 und ggf. weiterer Geräte so zu betreiben, wie es in dem Rezeptschritt definiert ist. Das Rezept kann in einem Speicher der Küchenmaschine 11 oder außerhalb der Küchenmaschine gespeichert sein. Im zweiten Fall ist eine Datenverbindung zwischen dem Speicherort des Rezepts und der Steuerungseinheit 22 vorhanden oder kann hergestellt werden. Insbesondere ist die Küchenmaschine 11 mit einer vorzugsweise drahtlosen Schnittstelle 23 ausgestaltet, um Datenverbindungen zu der Vorrichtung 1, einer Datenverarbeitungseinheit und/oder mindestens einem weiteren Gerät herzustellen. Die Schnittstelle 23 kann das Senden und/oder Empfangen von Daten ermöglichen. Beispielsweise kann eine Datenverbindung zu einem Speisenthermometer und/oder einem Ofen hergestellt werden.

Abweichend von Figur 2 kann die Vorrichtung 1 auch Teil der Steuerungseinheit 22 der Küchenmaschine 11 sein. Ein Prozessor kann daher sowohl zur Steuerung der Küchenmaschine als auch zur Ermittlung der Ziel-Kerntemperatur dienen. In diesem Fall kann die Schnittstelle 23 der Küchenmaschine 11 auch als Schnittstelle 6 zur datentechnischen Verbindung mit einem Speisenthermometer und/oder als Einheit zum Erhalten von Informationen 2 der Vorrichtung 1 dienen (vergl. Fig. 1).

Insbesondere umfasst die Küchenmaschine im Speisenzubereitungsgefäß 12 ein Werkzeug zum Mischen und/oder Zerkleinern einer Speise und/oder eine Heizeinrichtung zum Erhitzen einer Speise im Speisenzubereitungsgefäß 12.

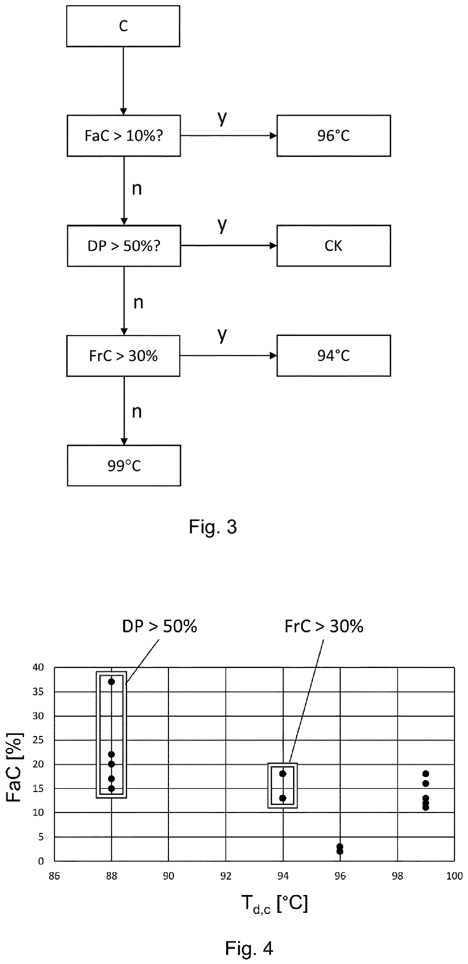

Figur 3 zeigt ein Ablaufdiagramm zur Ermittlung einer Ziel-Kerntemperatur von Kuchen C. Die Vorrichtung kann geeignet sein, einen, mehrere oder alle der dargestellten und in der Folge beschriebenen Schritte auszuführen. Vor den dargestellten Schritten kann die Vorrichtung ermitteln, ob das Rezept eine zu erhitzende Speise betrifft. Beispielsweise kann das Rezept darauf überprüft werden, ob ein als Gerät ein Ofen verwendet wird. Wenn ja, kann die Art der Speise ermittelt werden. Wenn es sich um einen Kuchen handelt, können die folgenden Schritte durchgeführt werden.

Zunächst wird ermittelt, ob der Fettanteil FaC größer ist als 10%. Wenn ja y, kann als Ziel-Kerntemperatur beispielsweise ungefähr 96°C festgelegt werden.

Wenn nein n, wird ermittelt, ob der Anteil der Milchprodukte DP größer ist als 50%. Hierbei wird insbesondere Butter ausgenommen. Daher kann der Anteil der Milchprodukte DP beispielsweise als Anteil der Summe aus Milch, Sahne, Joghurt und ggf. (Frisch)-Käse wie z. B. Quark berechnet werden. Ist dies der Fall, handelt es sich um einen Käsekuchen. Käsekuchen stellen eine Besonderheit dar, da hier keine einheitliche Ziel-Kerntemperatur für alle Käsekuchen oder Gruppen von Käsekuchen angegeben werden kann. Die optimale Ziel-Kerntemperatur hängt stark von unterschiedlichen Variablen ab, beispielsweise Zubereitung im Wasserbad, Backtemperatur, gewünschtes Resultat (z. B. fluffiger, weicher Kuchen, vollständig fester Kuchen oder Zwischenstufen), gewünschter Bräunungsgrad, etc. Obwohl die einem Käsekuchen typischerweise zugrunde liegenden Eier bei einer Kerntemperatur von 65°C vollständig stocken bzw. fest werden, hängt die optimale Ziel-Kerntemperatur von den genannten Variablen ab.

Ist der Anteil der Milchprodukte DP nicht größer als 50%, kann geprüft werden, ob der Fruchtgehalt FrC größer ist als 30%. Der Fruchtgehalt bezieht sich typischerweise auf frische und getrocknete Früchte. Ist der Fruchtgehalt FrC größer als 30%, kann eine Ziel-Kerntemperatur von 94°C festgelegt werden. Ist der Fruchtgehalt kleiner oder gleich 30%, kann eine Zielkerntemperatur von 99°C festgelegt werden. Es kann abweichend davon auch ein Übergang vorgesehen sein, beispielsweise in Form einer Rampe. So kann beispielsweise bei einem Fruchtgehalt zwischen 25% und 35% oder zwischen 20% und 40% durch z. B. lineare Interpolation eine Ziel-Kerntemperatur zwischen den genannten Werten ermittelt werden. Derartige Übergänge können alternativ oder ergänzend auch an anderen Stellen verwendet werden, bei denen zwei unterschiedliche Ziel-Kerntemperaturen bei eng zusammenliegenden Werten eines Anteils einer Zutat oder Zutatengruppe aufeinander treffen.

Figur 4 zeigt in einem Diagramm den Zusammenhang zwischen Fettgehalt FaC und Ziel-Kerntemperatur T_{d,c} unterschiedlicher Speisen. Für die Ermittlung der Ziel-Kerntemperatur wurde eine Vielzahl unterschiedlicher Speisen nach jeweiligen Rezepten zubereitet und jeweils untersucht, welche Kerntemperatur das optimale Ergebnis liefert. Teilweise wurden mehrere Wiederholungen durchgeführt, um die optimale Kerntemperatur zu bestimmen. Die für eine Speise ermittelte optimale Kerntemperatur ist dann die Ziel-Kerntemperatur. Eine optimale Ziel-Kerntemperatur T_{d,c} für eine Reihe von Speisen beträgt 88°C. Die betreffenden Speisen weisen einen Anteil an Milchprodukten DP von mehr als 50% auf. Der Fettgehalt FaC beträgt mehrheitlich zwischen 15% und 23%, eine Speise weist aber auch einen Fettgehalt FaC von mehr als 35% auf. Diese Speisen sind typischerweise Käsekuchen. Wie oben ausgeführt, können Käsekuchen in Abhängigkeit von einer Reihe von Variablen auch abweichende optimale Ziel-Kerntemperaturen T_{d,c} aufweisen.

Beträgt der Fruchtanteil FrC mehr als 30%, kann eine Ziel-Kerntemperatur T_{d,c} von 94°C festgelegt werden. Der Fettgehalt FaC bewegt sich typischerweise zwischen 10% und 20%. Bei sehr geringen Fettgehalten FaC unter 10% oder unter 5% kann eine Ziel-Kerntemperatur T_{d,c} von 96°C festgelegt werden. Eine weitere Gruppe von Speisen mit Fettanteilen FaC zwischen 10% und 20% kann eine Ziel-Kerntemperatur T_{d,c} von 99°C aufweisen.

**Bezugszeichenliste**

| | |
|---|---|
| Vorrichtung | 1 |
| Einheit zum Erhalten von Informationen | 2 |
| Festlegungseinheit | 3 |
| Rezeptspeicher | 4 |
| Datenverbindung | 5 |
| Schnittstelle | 6 |
| Speisenthermometer | 7 |
| System | 10 |
| Küchenmaschine | 11 |
| Speisenzubereitungsgefäß | 12 |
| Halterung | 13 |
| Griff | 14 |
| Arme | 15 |
| Deckel | 16 |
| Verschluss | 17 |
| Fußteil | 18 |
| Benutzeroberfläche | 19 |
| Bildschirm | 20 |
| Druckknopf | 21 |
| Steuerungseinheit | 22 |
| Schnittstelle | 23 |
| Kuchen | C |
| Fettanteil | FaC |
| Milchprodukte | DP |
| Fruchtanteil | FrC |
| Käsekuchen | CK |
| Ja | y |
| Nein | n |
| Ziel-Kerntemperatur | T_{d,c} |

## Patentansprüche

1. Vorrichtung (1) zum Ermitteln einer Ziel-Kerntemperatur (T_{d,c}) für eine zu erhitzende Speise, umfassend:
- Eine Einheit zum Erhalten von Informationen (2) zu Zutaten einer Speise,
- Eine Festlegungseinheit (3) zum Festlegen einer Ziel-Kerntemperatur (T_{d,c}) basierend auf den erhaltenen Informationen der Speise.

2. Vorrichtung (1) nach dem vorhergehenden Anspruch, **dadurch gekennzeichnet, dass** die Vorrichtung (1) dazu eingerichtet ist, unter Verwendung der erhaltenen Informationen eine Art der Speise zu ermitteln und die ermittelte Art der Speise beim Festlegen der Ziel-Kerntemperatur (T_{d,c}) zu berücksichtigen.

3. Vorrichtung (1) nach einem der vorhergehenden Ansprüche, **dadurch gekennzeichnet, dass** die Vorrichtung (1) dazu eingerichtet ist, auf ein elektronisch gespeichertes Rezept zum Zubereiten der Speise zuzugreifen.

4. Vorrichtung (1) nach dem vorhergehenden Anspruch, **dadurch gekennzeichnet, dass** die Vorrichtung (1) dazu eingerichtet ist, das Rezept zu analysieren, um zu ermitteln, ob das Rezept eine zu erhitzende Speise betrifft.

5. Vorrichtung (1) nach einem der zwei vorhergehenden Ansprüche, **dadurch gekennzeichnet, dass** die Vorrichtung (1) dazu eingerichtet ist, das Rezept zu analysieren, um Informationen zu den Zutaten der Speise zu erhalten,
insbesondere wobei die Vorrichtung (1) dazu eingerichtet ist, einen Anteil einer Zutat, einer Zutatengruppe oder eines Nährstoffs zu ermitteln.

6. Vorrichtung (1) nach dem vorhergehenden Anspruch und Anspruch 3, **dadurch gekennzeichnet, dass** die Vorrichtung (1) dazu eingerichtet ist, auf der Basis des elektronisch gespeicherten Rezepts einen Fettanteil (FaC) der Speise zu ermitteln und den Fettanteil (FaC) beim Festlegen der Ziel-Kerntemperatur (T_{d,c}) zu berücksichtigen.

7. Vorrichtung (1) nach einem der vorhergehenden Ansprüche, **dadurch gekennzeichnet, dass** die Vorrichtung (1) dazu eingerichtet ist, mittels einer datentechnischen Verbindung mit einem Speisenthermometer (7) durch das Speisenthermometer (7) ermittelte Informationen zu einer Kerntemperatur einer Speise zu erhalten und anhand der erhaltenen Informationen zu ermitteln, ob die Ziel-Kerntemperatur (T_{d,c}) erreicht ist.

8. Vorrichtung nach dem vorhergehenden Anspruch, **dadurch gekennzeichnet, dass** die Vorrichtung (1) dazu eingerichtet ist, die ermittelte Ziel-Kerntemperatur als Soll-Kerntemperatur für einen Speisenzubereitungsvorgang zu setzen.

9. Vorrichtung (1) nach einem der vorhergehenden Ansprüche, **dadurch gekennzeichnet, dass** die Vorrichtung (1) dazu eingerichtet ist, eine Heizeinrichtung zum Erhitzen der Speise zu steuern, um bei Erreichen der Ziel-Kerntemperatur (T_{d,c}) ein Erhitzen der Speise zu beenden.

10. Verfahren zum Ermitteln einer Ziel-Kerntemperatur (T_{d,c}) für eine zu erhitzende Speise, umfassend die Schritte:
- Erhalten von Informationen zu Zutaten einer Speise,
- Festlegen einer Ziel-Kerntemperatur (T_{d,c}) basierend auf den erhaltenen Informationen der Speise.

11. Verfahren nach dem vorhergehenden Anspruch, **dadurch gekennzeichnet, dass** die zu erhitzende Speise ein Kuchen ist, wobei basierend auf den Informationen zu Zutaten der Speise ermittelt wird, ob ein Fettanteil (FaC) größer ist als ein erster Grenzwert von ungefähr 10%, und wenn ja, eine Ziel-Kerntemperatur (T_{d,c}) von ungefähr 96 °C festgelegt wird.

12. Verfahren nach dem vorhergehenden Anspruch, **dadurch gekennzeichnet, dass** in dem Fall, dass der Fettanteil (FaC) kleiner oder gleich dem ersten Grenzwert ist, basierend auf den Informationen zu Zutaten der Speise ermittelt wird, ob ein Anteil einer Summe aus Milch, Sahne, Joghurt und Frischkäse größer ist als ein zweiter Grenzwert von ungefähr 50%, und wenn ja, ermittelt wird, dass es sich um einen Käsekuchen handelt.

13. Verfahren nach dem vorhergehenden Anspruch, **dadurch gekennzeichnet, dass** in dem Fall, dass der Anteil der Summe aus Milch, Sahne, Joghurt und Frischkäse kleiner oder gleich dem zweiten Grenzwert ist, basierend auf den Informationen zu Zutaten der Speise ermittelt wird, ob ein Fruchtgehalt (FrC) größer ist als ein dritter Grenzwert von ungefähr 30%, und wenn ja, eine Ziel-Kerntemperatur (T_{d,c}) von ungefähr 94 °C festgelegt wird, und wenn der Fruchtgehalt (FrC) kleiner ist als der dritte Grenzwert, eine Ziel-Kerntemperatur (T_{d,c}) von ungefähr 99 °C festgelegt wird.

14. System (10) zum Zubereiten einer Speise, umfassend eine Küchenmaschine (11) zum Durchführen eines Speisenzubereitungsvorgangs durch Erhitzen, Zerkleinern und/oder Mischen einer Speise in einem Speisenzubereitungsgefäß (12) sowie eine Vorrichtung (1) gemäß einem der Ansprüche 1 bis 11.

15. System (10) nach dem vorhergehenden Anspruch, wobei die Küchenmaschine (11) dazu eingerichtet ist, auf ein digitales Rezept zuzugreifen und durch einen Rezeptschritt des Rezeptes veranlasst zu werden, eine Funktionskomponente der Küchenmaschine (11) und/oder eine mit dem System (10) verbundene Heizeinrichtung in einer durch den Rezeptschritt definierten Weise zu betreiben.

16. System (10) nach einem der zwei vorhergehenden Ansprüche, **dadurch gekennzeichnet, dass** das System (10) eine Eingabeeinrichtung aufweist, mit welcher ein Benutzer ein Rezept eingeben kann, so dass die Vorrichtung für das Rezept eine Ziel-Kerntemperatur festlegen kann.
